(19) Europäisches Patentamt
European Patent Office
Office européen des brevets

(11) **EP 3 896 617 A1**

(12) **EUROPEAN PATENT APPLICATION**

(43) Date of publication:
**20.10.2021  Bulletin 2021/42**

(51) Int Cl.:
**G06N 3/08** (2006.01)      **G06N 3/04** (2006.01)
**G06N 5/04** (2006.01)

(21) Application number: **20170152.1**

(22) Date of filing: **17.04.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Koninklijke Philips N.V.**
**5656 AG Eindhoven (NL)**

(72) Inventors:
• **PLETEA, Daniel**
  **5656 AE Eindhoven (NL)**
• **VAN LIESDONK, Peter Petrus**
  **5656 AE Eindhoven (NL)**
• **KOSTER, Robert Paul**
  **5656 AE Eindhoven (NL)**

(74) Representative: **Philips Intellectual Property & Standards**
**High Tech Campus 5**
**5656 AE Eindhoven (NL)**

(54) **DETERMINING TRUSTWORTHINESS OF TRAINED NEURAL NETWORK**

(57)     A mechanism for determining the trustworthiness of training a neural network, and thereby of the trained neural network. Values of a set of weights of the neural network are monitored during the training process. The monitored values are used to determine the trustworthiness of the training of the neural network.

FIG. 1

**Description**

FIELD OF THE INVENTION

The present invention relates to the field of neural networks and, in particular, to the field of neural networks hosted by external providers to an electronic device that uses the neural network.

BACKGROUND OF THE INVENTION

The advance of artificial intelligence approaches has led to an increasing demand for accurate and fast neural networks for performing a number of automated processes. Indeed, neural networks are being ever more used across a wide variety of applications, such as in the fields of medicine, consumer electronics and monitoring devices. There is a desire for electronic devices having a relatively low processing power, a "low power device", to make use of a neural network. However, training and performing inference with a neural network are computationally expensive processes, which can affect the operation of such a low power device.

One method for enabling (low power) electronic devices to access the functionality of a neural network is to host the neural network on an external provider or device, such as a cloud-computing provider, which has a relatively large processing power or capability. The external provider can perform the necessary training and operation of the neural network based on data provided or indicated by the (low power) electronic device.

In other words, there may be a distribution of workload between a (low power) electronic device that wishes to use a neural network, and an external provider (such as a cloud computing provider) that trains and hosts the neural network. During use of the neural network (after training), a (low power) electronic device may provide input data to the external provider, which processes it using the neural network to generate the desired output inferences for use by the (low power) electronic device.

There is, however, a need for the output inferences provided by the external provider to be accurate and trustworthy. It is plausible that an unscrupulous operator of an external provider may wish to reduce its computational load (e.g. to save money or processing resource) during training and/or inference of the neural network, e.g. by training or performing inference using a simpler but less accurate neural network.

SUMMARY OF THE INVENTION

There is therefore a desire to ensure that the neural network used by, or the output inferences provided by, the external provider is/are accurate and trustworthy. The invention is defined by the independent claims. The dependent claims define advantageous embodiments.

According to examples in accordance with an aspect of the invention, there is provided a computer-implemented method of determining a trustworthiness of the training of a neural network, for performing a computational task desired by an electronic device, wherein the neural network is hosted by an external provider to the electronic device.

The computer-implemented method comprises: instructing an external provider to train a neural network based on a ground truth dataset, the ground truth dataset providing sample input data entries and corresponding sample output data entries for the computational task desired by the electronic device; monitoring, using a monitoring device, values of a first set of one or more weights of the neural network during the training of the neural network performed by the external provider; and determining, using the monitoring device, a trustworthiness of the training of the neural network based on the monitored values of the first set of one or more weights of the neural network.

The present disclosure proposes to monitor or assess the (progress of) training of a neural network by monitoring one or more weights (temporally) present during training of the neural network. The present inventors recognize that monitoring information about the weights can be used to accurately determine a measure or other indicator of trustworthiness of the training of the neural network, and therefore of the neural network itself.

Determining the trustworthiness of the training of the neural network may comprise generating a trustworthiness indicator, e.g. comprising binary, categorical or numeric (e.g. continuous) data, that indicates the trustworthiness of the training of the neural network. The skilled person would readily contemplate various data formats for storing information about a trustworthiness of a neural network.

The monitoring device is adapted to monitor the first set of one or more weights by obtaining values of the first set of one or more weights from different training epochs of the training of the neural network. The obtaining may be performed during the training of the neural network (e.g. by the external provider sending the values for a particular epoch after that epoch is complete) or after training by the neural network (e.g. by the external provider storing the values for a particular epoch, and later providing them to the monitoring device).

Thus, the step of monitoring values of a first set of one or more weights may be a step of obtaining, by the monitoring device, values of a first set of one or more weights of the neural network after different training epochs of the training of the neural network.

In some embodiments, the first set of one or more weights of the neural network does not comprise all of the weights of the neural network. In other words, the first set of one or more weights may comprise only a subset of the weights of the neural network. This embodiment improves the computational efficiency of the monitoring of the training of the neural network.

In at least one example, the step of monitoring a first set of one or more weights comprises instructing the external provider to, after each training epoch of the training of the neural network: determine whether the output of a hash function, that processes at least the values of the first set of one or more weights, meets first predetermined criteria; and in response to determining that the output of the hash function meets the first predetermined criteria, transmit the values of the first set of one or more weights to the monitoring device; and wherein the step of determining a trustworthiness of the training of the neural network comprises determining, at the monitoring device, whether the output of the same hash function, that processes the transmitted values of the set or more weights and the cryptographic key, meets the predetermined criteria.

The present disclosure recognizes that, if an external provider were to attempt to cheat or bypass the hash function methodology for determining a trustworthiness of the training of the neural network (e.g. by providing forged or false values for weights that meet the hash function), then they would need to both generate a neural network that both performs the desired computational task and is able to forge values for weights that would verify the hash function. This would likely result in requiring more computational complexity than simply performing the appropriate training of the neural network.

Thus, trustworthiness of the neural network can be assured by introducing a reporting task (the hash function) during training of the neural network, to thereby make it less computationally complex to simply perform the requested training of the neural network (rather than performing training of a less complex neural network).

In some embodiments, the hash function and/or first predetermined criteria are selected such that the average number of training epochs between each time the output of the hash function meets the first predetermined criteria is between 8 and 32.

Reporting the values of the first set of weights after between 8 and 32 training epochs results in less computational complexity at the monitoring device to monitor the values of the first set of weights over time, whilst enabling a continual and repeated monitoring of the training of the neural network throughout the training process.

In some examples, the average number of training epochs between each time the output of the hash function meets the predetermined criteria may be 16.

In some embodiments, the hash function and/or first predetermined criteria are selected such that the average number of training epochs between each time the output of the hash function meets the first predetermined criteria is between 0.5% and 10% of the total number of training epochs, for example, between 1% and 5% of the total number of training epochs.

Information on the total number of training epochs would be readily available, e.g. as per a training instruction to the external network, as the total number of training epochs may be known or selected in advance.

The first predetermined criteria may comprise a predetermined number of least significant bits of the output of the hash function having a predetermined pattern.

By way of example, the predetermined number of least significant bits may be 4 and the predetermined pattern may be "0000". Other examples of a predetermined pattern would be apparent to the skilled person, e.g. a pattern of "1111", "0011", "0001" or any other combination. Other predetermined numbers of bits would also be apparent to the skilled person, and the skilled person would appreciate how using a different predetermined number of bits may result in the average number of training epochs between each time the output of the hash function meets the first predetermined criteria changing.

Of course, rather than using the least significant bits, any other suitable information of the output of the hash function may be used (e.g. the most significant bits, an XOR sum of all bits of the output of the hash function and so on).

Preferably, the hash function comprises processing the values of the first set of one or more weights and a cryptographic key to produce the output. The proposed hash function provides a suitable, but low complexity, method of processing the values of the first set of one or more weights. However, other suitable hash functions would be apparent to the skilled person.

Optionally, the step of determining a trustworthiness of the training of the neural network comprises determining, at the monitoring device, whether the values of the first set of one or more weights are converging over time.

Converging values of the first set of one or more weights (e.g. where each value of the first set of one or more weights converges over time) indicates that the training of the neural network is progressing appropriately, e.g. and that the external provider is not simply randomly modifying the values of the set of weights. Determining whether the values of the first set of one or more weights are converging thereby enables a trustworthiness of the training of the neural network to be accurately identified.

In some embodiments, the first set of one or more weights comprises a first set of one or more weight traces of the neural network.

A weight trace is a set of weights in which each weight links different layers of the neural network, wherein the weight trace links neurons from all layers of the neural network together. As a weight trace covers all layers of the neural network, this makes it harder for the neural network to cheat when the trustworthiness is being monitored (e.g. prevents the neural network from training only a subset of the layers of the neural network).

Rather than using a first set of weight traces, embodiments may simply define that the first set of one or more weights comprises a different weight for each layer of the neural network.

The step of monitoring values of a first set of one or more weights may comprise obtaining, using the monitoring device, the values of the first set of one or more weights using a private information retrieval process. A private information retrieval process enables the monitoring device to keep the weights that are being requested from the external provider, thereby reducing a likelihood that the external provider will be able to cheat and bypass the trustworthiness check.

The step of monitoring values of a first set of one or more weights may comprise: obtaining first values of all weights of the neural network; and obtaining second values of all weights of the neural network, the second values being values of all weights after one or more training epochs have been performed on the neural network since the weights of the neural network had the first values.

The step of determining a trustworthiness of the training of the neural network may comprise: initializing, at the monitoring device, a second neural network having weights of the first values; performing a same number of one or more training epochs on the second neural network as the number of training epochs performed on the neural network between the weights of the neural network having the first values and the weights of the neural network having the second values, to produce a partially trained second neural network; and comparing the values of all weights of the partially trained second neural network to the second values of all weights.

This embodiment enables the monitoring device to verify that the external provider is not cheating with regards to the training by verifying that a set of training epochs performed by the external provider are correctly executed. Whilst this verification step is computationally more expensive that the previously described approaches (e.g. monitoring convergence of weights and/or detection of the values of weights meeting some predetermined criteria), this approach is harder to fake or bypass by an external provider.

In some embodiments, the number of one or more training epochs is 1.

Some embodiments further comprise obtaining, at the monitoring device, the final trained neural network from the external provider; performing, using the monitoring device, one or more further training epochs on the final trained neural network to generate a further trained neural network; and comparing, at the monitoring device, the values of a second set of one or more weights of the further trained neural network to the values of the second set of one or more weights of the final trained neural network to determine a trustworthiness of the final trained neural network.

In some embodiments, the method comprises a step of comparing at the monitoring device comprises determining that the final trained neural network is untrustworthy in response to the values of the second set of one or more weights of the further trained neural network differing by more than a predetermined amount to the values of the second set of one or more weights of the final trained neural network.

In some embodiments, prior to performing one or more further training epochs on the final trained neural network, the method may comprise attempting to prune the final trained neural network. If the final trained neural network cannot be pruned, that is may be determined that the final trained neural network is trustworthy.

Preferably, the monitoring device comprises the electronic device that desires to perform the computational task.

Embodiments of the invention may provide a computer program product comprising computer program code means which, when executed on a computing device having a processing system, cause the processing system to perform all of the steps of any herein described method.

There is also proposed a monitoring device configured to determine a trustworthiness of the training of a neural network, for performing a computational task desired by an electronic device, wherein the neural network is hosted by an external provider to the electronic device, wherein the external provider has been instructed to train a neural network based on a ground truth dataset, the ground truth dataset providing sample input data entries and corresponding sample output data entries for the computational task desired by the electronic device.

The monitoring device is configured to: monitor values of a first set of one or more weights of the neural network during the training of the neural network performed by the external provider; and determine a trustworthiness of the training of the neural network based on the monitored values of the first set of one or more weights of the neural network.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Figure 1 is a flowchart illustrating a method according to a generic embodiment of the invention;
Figure 2 illustrates a neural network for improved contextual understanding;
Figure 3 is a flowchart illustrating a method according to an embodiment;
Figure 4 is a flowchart illustrating a method according to an embodiment;
Figure 5 is a flowchart illustrating a method according to an embodiment;
Figure 6 illustrates a system comprising a monitoring device according to an embodiment; and
Figure 7 is a flowchart illustrating a method.

DETAILED DESCRIPTION OF THE EMBODIMENTS

Embodiments of the invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a mechanism for determining the trustworthiness of training a neural network, and thereby of the trained neural network. Values of a set of weights of the neural network are monitored during the training process. The monitored values are used to determine the trustworthiness of the training of the neural network.

The invention relies upon a recognition that external providers for a neural network may attempt to shortcut a training process (e.g. perform incomplete training) or train a simpler neural network. The proposed mechanism monitoring values of weights during the training to determine a trustworthiness of the training of the neural network, and therefore of the trained neural network.

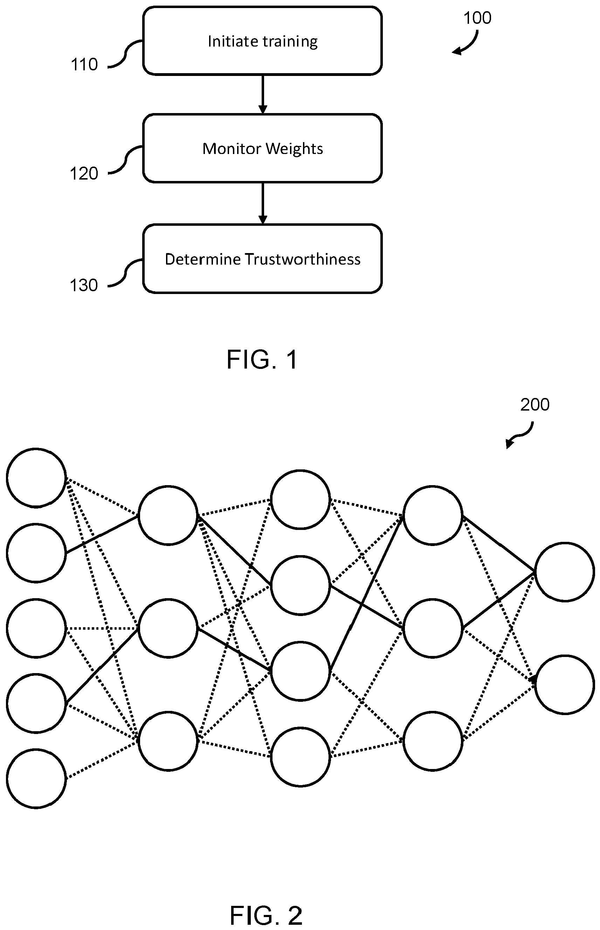

Figure 1 is a flowchart illustrating a generic method 100 of the invention, to understand the underlying concept behind the invention.

The method 100 is configured for determining a trustworthiness of a training of a neural network performed by an external provider/device, which is external to an electronic device that desires use of the neural network for some processing task.

The method 100 comprises a step 110 of initiating training of a neural network on an external provider or external device. This may comprise instructing the external provider to train a neural network based on some training data.

In particular, step 110 comprises instructing an external provider to train a neural network based on a ground truth dataset, the ground truth dataset providing sample input data entries and corresponding sample output data entries for the computational task desired by the electronic device.

Step 110 may comprise, for example, transmitting an instruction signal to the external provider to initiate training.

The instruction signal may identify the ground truth dataset or memory containing the ground truth dataset usable for training the neural network. The instruction signal may, for example, contain information that facilitates or enables the external provider to access such a database or memory (e.g. identifying information and/or security information).

As another example, the instruction signal may comprise the ground truth dataset itself.

The method 100 subsequently, after training has been initiated, moves to a step 120 of monitoring values of a first set of one or more weights of the neural network during the training of the neural network performed by the external provider. Step 120 is performed by a monitoring device. The first set of one or more weights preferably comprise a subset of all weights of the neural network.

The monitoring device is adapted to monitor the first set of one or more weights by obtaining values of the first set of one or more weights from different training epochs of the training of the neural network. The obtaining may be performed during the training of the neural network (e.g. by the external provider sending the values for a particular epoch after that epoch is complete) or after training by the neural network (e.g. by the external provider storing the values for a particular epoch, and later providing them to the monitoring device).

By monitoring a first set of one or more weights, the progress of the training process can be monitored appropriately. In particular, monitoring a first set of weights enables a trustworthiness of the training process to be assessed (e.g. by determining whether the training is progressing or did progress as expected).

Monitoring a first set of weights may comprise, for example, the monitoring device periodically or pseudo-randomly requesting the external provider to pass values for the first set of weights to the monitoring device (e.g. using a private information retrieval process).

As another example, monitoring a first set of weights may be performed by instructing the external provider to commit values of the first set of weights if they meet some predetermined criteria. A "commit" process may comprise either the external provider directly passing the values of the first set of weights to the monitoring device if they meet some predetermined criteria or the external provider storing the values of the first set of weights (preferably with some epoch-identifying information) for later transmission to the monitoring device.

The predetermined criteria may be met, for example, when an output of a function that processes the first set of weights meets some predetermined criteria. Preferably, the predetermined criteria are selected so that it results in the values of the first set of weights being committed in a pseudorandom manner, i.e. every X many training epochs where X is pseudorandom (but may have a predetermined average).

In some examples, the values of the first set of weights are only transmitted to the monitoring network after training of the neural network is complete. Thus, the external provider may store values of the first set of weights when they meet some predetermined criteria - and pass all stored values (e.g. together with an indicator of when they were stored - such as epoch-identifying information storage) to the monitoring device once training is complete.

In other examples, the stored values of the first set of weights are transmitted to the monitoring network at periodic intervals. For example, the external provider may pass all stored values (e.g. and an indicator of when they were stored - such as an order of their storage) to the monitoring device at periodic intervals (before optionally deleting stored values to increase available memory space).

In yet other examples, the stored values of the first set of weights are only transmitted to the monitoring network when the stored values meet some other predetermined criteria, e.g. a certain number of values have been stored, or values for a certain number of training epochs have been stored.

In yet other examples, the stored values of the first set of weights are only transmitted to the monitoring device in response to a request by the monitoring device.

Stored values of the first set of weights may be deleted once they are transmitted to the monitoring device to reduce memory usage.

When passing stored values to the monitoring device, the external provider may also include some time-based information with the stored values, e.g. indicating an order of the values, a time at which the values were obtained and/or an identity of the training epoch from which each value was obtained. This information may be obtained and stored alongside the first set of values when the first set of values is stored or committed (in/to a memory unit).

In this way, the monitoring device is able to monitor the values of a first set of weights of the neural network during training of the neural network, as the values (obtained during training) are stored and transmitted to the monitoring device for the purposes of analysis, monitoring and/or assessment.

Other examples of facilitating a monitoring of the first set of weights, i.e. the passing of values of the first set of weights to the monitoring device, will be apparent to the skilled person.

The method 100 also comprises a process 130 of determining, using the monitoring device, a trustworthiness of the training of the neural network based on the monitored values of the first set of one or more weights of the neural network.

Process 130 may comprise, for example, determining a measure of trustworthiness, which may be a binary, categorical and/or numerical measure of trustworthiness.

Process 130 may comprise, for example, determining whether the first set of weights are converging over time (indicating that the training process is being performed appropriately).

This may be performed, for example, by, for each of the first set of weights, determining a difference between a first value (obtained at a first point in time) and a second value (obtained at a second point in time) of the weight, and subsequently combining (e.g. summing or averaging) all the differences. This provides an indicator of distance between different points in time, which can be exploited to determine whether the weights are converging over time (e.g. if the distances get smaller over time).

In another or further example, if the external provider is instructed to commit the values of the first set of weights if/when they meet (i.e. in response to them meeting) some predetermined criteria, the monitoring device may check whether the values of the first set of weights do indeed meet the predetermined criteria (to thereby check that the training process is proceeding appropriately).

If an external provider would want to cheat, he would need to forge values for the first set of weight that meet the predetermined criteria, whilst also produced a trained neural network that performs the desired task. The inventors recognize that this process would be likely be require more computational work than simply performing the training appropriately.

Figure 2 schematically illustrates a simple representation of a neural network 200, which is used to understand an embodiment of the invention.

As is widely known in the art, a neural network is formed from a plurality of nodes or neurons arranged in a plurality of layers. A value of each neuron is a function of weighted values of one or more neurons in a previous layer (or, for a first layer, values of features of input data).

During training of the neural network, values of the weights are iteratively modified, each iterative modification taking place in a single training epoch (which updates all weights in the neural network. Training is complete when the output of the neural network meets some predetermined accuracy criteria (compared to a training set of data), as is well known in the art, and/or after a predetermined number of training epochs have been completed.

The first set of weights may comprise a selection of the weights of the neural network. For example, a pseudorandom selection of weights.

In preferred embodiments, the first set of weights comprises one or more weight traces of the neural network. A weight trace is a set of weights that tracks from a node of the first (or "input") layer to a node of the final (or "output") layer, and comprising a single weight between each layer. Thus, the number of weights in a weight trace is equal to the number of layers in the neural network minus one.

As a weight trace uses a weight that connects each layer of the neural network to one another, use of one or more weight traces makes it harder for the neural network to cheat when the trustworthiness is being monitored, as it ca help reduce the likelihood that the neural network will attempt to train only a subset of the layers of the neural network.

For the sake of improved understanding, two exemplary weight traces are illustrated in solid lines (with dotted lines indicating other weights of the neural network).

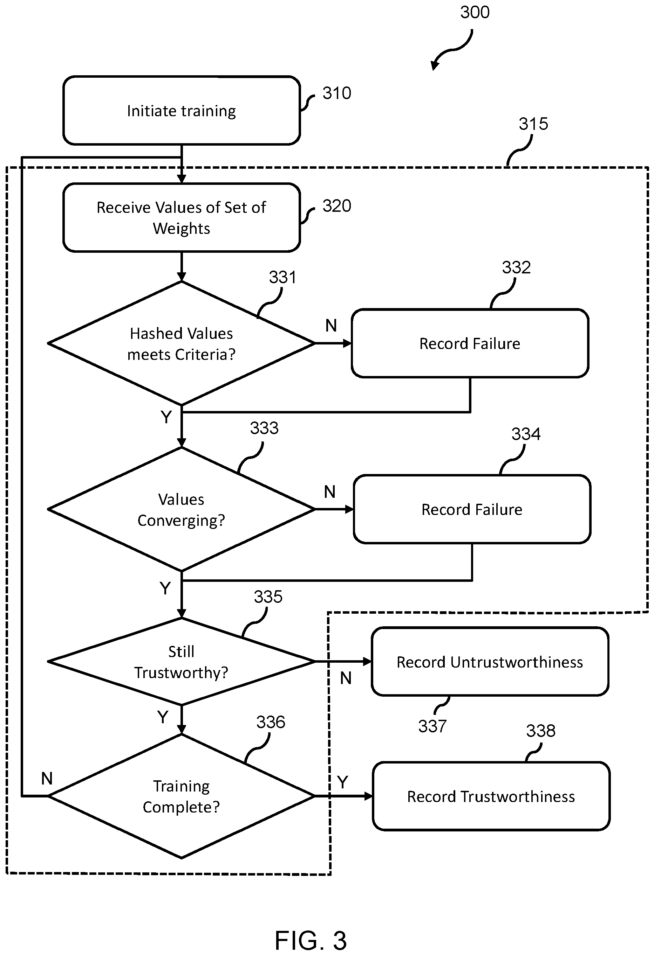

Figure 3 illustrates a method 300 according to an embodiment.

The method 300 comprises a step 310 of initiating a training of the neural network on the external provider. This may be performed according to any previously described method, e.g. with respect to step 110 described with reference to Figure 1.

The method 300 then performs an iterative process 315 to monitor values of a first set of weights of the neural network and to determine, as a result of the monitoring, whether the training process performed by the external provider is trustworthy.

The iterative process 315 comprises a step 320 of obtaining values for the first set of weights, and processing the obtained values in a process 331-336 to determine whether the training process is or is not trustworthy (with respect to the most recently obtained values).

The iterative process 315 is performed until the training process is complete and all values of the first set of weights to be obtained by the monitoring device have been obtained.

Thus, the method 300 comprises a step 320 of receiving values for a first set of weights. This may also be performed according to any previously described method, e.g. with respect to step 120 described with reference to Figure 1.

For a first iteration of process 315, step 320 may comprise obtaining the earliest available values for the first set of weights, i.e. the values associated with the earliest available training epoch of the training process. For subsequent iterations of process 315, step 320 may comprise obtaining the next earliest available values for the first set of weights.

As previously described, the external provider may be instructed (by the monitoring device) to pass or transmit values of a first set of weights to the monitoring device in response to the values meeting some predetermined criteria, such as when a hashing-based (pseudo) random condition is satisfied. In this scenario, step 320 may simply comprise obtaining the transmitted values of the first set of weights directly from the external provider.

In other examples, the external provider may (temporarily) store values of the first set of weights in response to their meeting some predetermined criteria, and later pass on the stored values to the monitoring device. Methods for this approach have been previously described.

In this scenario, step 320 may comprise obtaining the next earliest set of stored values for the first set of weights - i.e. the values associated with the earliest training epoch for which values of the first set of weights were stored.

Thus, more generally, the external provider may be instructed, e.g. in step 310, to "commit" (e.g. communicate or store) values of a first set of weights when the values of the first set of weights meets some predetermined criteria. The precise process performed by step 320 may depend upon how the values of the first set of weights are committed.

The training epoch directly after which the values of the first set of weights meets the predetermined criteria, i.e. that causes the first set of weights to meet the criteria, can be labelled a "commitment epoch". This is because the commitment epoch causes the values of the first set of weights to be committed, i.e. communicated (or stored for later communication) to the monitoring device. Information on the commitment epoch, e.g. identifying how many training epochs the external provider has performed to reach the commitment epoch, may also be communicated to the monitoring device for analysis.

Preferably, the predetermined criteria are chosen so that it should be met, on average, every 8 and 32 training epochs of the training performed by the external provider on the neural network, and more preferably every 16 times. In other words, the values of the first set of weights should be committed, on average, between every 8 and 32 training epochs of the training performed by the external provider.

These values provide a good balance between ensuring that sufficient information is monitored to enable the entire training process to be monitored for trust, whilst reducing the amount of information that is passed to and processed by the monitoring device (which is the intent behind having the external provider perform training of the neural network.

The predetermined criteria may, for example, be met if an output of a hash function performed on the concatenated values of the first set of weights meets some predetermined criteria, e.g. if a predetermined number of most/least significant bits of the output are equal to a predetermined pattern (or one of a set of predetermined patterns).

For example, the predetermined number of most/least significant bits of the output may be the 4 least significant bits, and the predetermined pattern may be "0000". This results in the predetermined criteria being met, on average, every 16 epochs. Other suitable numbers of most/least significant bits and patterns will be apparent to modify the average number of epochs.

In some embodiments, the hash function and/or first predetermined criteria are selected such that the average number of training epochs between each time the output of the hash function meets the first predetermined criteria is between 0.5% and 10% of the total number of training epochs, for example, between 1% and 5% of the total number of training epochs.

Information on the total number of training epochs would be readily available, e.g. as per a training instruction to the external network, as the total number of training epochs may be known or selected in advance.

A suitable hash function may process the values of the first set of one or more weights and a cryptographic key to produce the output. In other words, the hash function may be a cryptographic hash function. A suitable example of cryptographic hash functions is the secure hash algorithm 2 (SHA), e.g. SHA256. However, other suitable cryptographic functions would be readily apparent to the skilled person, such as bcrypt, Whirlpool, SHA3, BLAKE2/BLAKE3 and so on, and may include any cryptographic hash function yet to be developed.

In order to reduce overhead/latency (such as that introduced by a hash function), the size of the first set of weights should be small, but remain representative of the overall neural network. For example, the number of weights in the first set of weights may lie in the region of between 5-10% of the total number of weights.

Where the first set of weights comprises weight traces, the number of weight traces in the first set may comprise between 5% and 10% of the total number of weight traces for a similar reason.

The method 300 then performs a process 331-336 for determining a trustworthiness of the training of the neural network, i.e. a trustworthiness of the neural network itself.

The process 330 comprises a step 331 of checking whether the received values of the first set of weights meets the predetermined criteria for transmitting or storing said values, which the external provider was instructed to follow.

In response to the received values of the first set of weights not meeting the predetermined criteria, the method 300 records a failure of the received values to meet the criteria in a step 332. The method then moves to step 333.

Otherwise, if the received values of the first set of weights meet the predetermined criteria, the method moves directly to step 333. Of course, there may be an intermediate step (not shown) of recording that the received values successfully met the predetermined criteria.

Step 333 comprises determining whether values for the first set of weights are converging, i.e. becoming closer to one another. In response to determining that the values for the first set of weights indicate that the neural network is failing to converge, a step 334 of recording a failure to converge may be performed.

In particular, step 333 may comprise determining a distance between the obtained values for the first set of weights and the (most immediately) previously obtained values for the set of weights (e.g. obtained in an immediately previous iteration of process 315).

In one example, a distance between the obtained values for the first set of weights and the previously obtained values for the first set of weights may be calculated by determining, for each weight in the first set of weights, a (absolute) distance (or "individual distance") between the value of said weight and a previous value for said weight, before summing or averaging (or otherwise combining) the determined individual distances.

In the form of an equation, the distance D between the obtained values for the first set of weights and the previously obtained values for the first set of weights, can be calculated as:

$$D = \sum_m \left| W_m^{j+1} - W_m^j \right| \qquad (1)$$

where W indicates a value of a weight, m represents a different weight in the first set of weights, j+1 indicates an obtained value for the first set of weights and j represents a previously obtained value for the set of weights.

This determined distance D can be further processed to determine whether the neural network is converging.

For example, step 333 may also comprise comparing the determined distance to a distance determined in a previous iteration of process 315 an ("earlier determined distance"). If the determined distance is less than the earlier determined distance, then it can be assumed that the values of the first set of weights are correctly converging.

If the determined distance is greater than the earlier determined distance, then a step 334 of recording a failure to converge may be performed. After performing step 334, the process 315 moves to step 335.

If the determined distance is less than the earlier determined distance, then the process 315 may simply move to step 335. Of course, there may be an intermediate step (not shown) of recording a success of the received values to meet the criteria.

The skilled person will appreciate that the full process of step 333 may not be performed until a number of iterations, e.g. at least three iterations, of process 315 have been performed. In particular, it may only be possible to compare the determined distance to an earlier determined distance, once two distances between different instances of values of the first set of weights have been determined.

Thus, step 333 (over multiple iterations of step 315) effectively comprises determining whether a distance or error between the values for the first set of weights is converging, and recording failures to converge, in step 334.

Step 335 comprises processing the recorded failures of the values to meet the predetermined criteria and/or the recorded failures to converge to determine a trustworthiness of the training process. If step 335 determines that the training process is untrustworthy, then a step 337 of recording an indicator of untrustworthiness may be performed.

For example, the training process may be considered to be untrustworthy if there are more than a predetermined number of failures recorded (i.e. by different iterations of steps 332 and 334), for example, more than a first predetermined number of failures recorded in step 332 and/or more than a second predetermined number of failures recorded in step 334.

Repeated failures of the values of the first set of weights, made available to the monitoring device, to converge may indicate that the training process is untrustworthy - e.g. the training has not progressed correctly or is not progressing correctly. It is, however, acknowledged that a training process may unintentionally cause a brief divergence (as this is natural during training), so the second predetermined number of failures may be appropriately selected to take this into account (e.g. may be a value greater than 1).

As another example, repeated failures of the values of the first set of weights made available to the monitoring device to meet the predetermined criteria, which define whether the values are passed/stored to the monitoring device, indicates that the training process is untrustworthy.

Preferably, both forms of failure are recorded and monitored when determining a trustworthiness of the training process.

In this scenario, if an external provider would wish to cheat (e.g. be erroneously considered "trustworthy"), it would need to forge values for the first set of weights that verify the hash function and also converge over time. This would require a high level of computational complexity, which is considered to be more computationally complex than simply performing the training process correctly.

To avoid an external provider simply repeatedly providing the same values for the first set of values (in an effort to circumvent the failure process described above), step 333 may comprise recording a failure to converge if a distance is identical to an earlier calculated distance.

In this manner, a binary indicator of untrustworthiness may be generated, e.g. in step 337, in response to the determined failures meeting some predetermined criteria. Performance of step 337 may terminate process 315.

Of course, a non-binary indicator may be generated, for example, responsive to the number of (cumulative) failures recorded by (different iterations of) step 332 and 334. The greater the number of failures, the less trustworthy the neural network. This may comprise processing the number of failures using a function.

Process 315 is iteratively repeated until the training process is complete, and all instances of values of the first set of values to be passed to the monitoring device (e.g. all instances of the first set of values that meet the predetermined criteria) have been processed. This may be performed by a determining step 336, which exits the process 315 when these criteria are met.

In other words, the process 330 may be performed until the training process is complete, and all values of the first set of data that were obtained by the monitoring device as a result of the training process have been processed. This may be determined in a step 336.

Upon exiting the process 315, a step 338 of recording an indicator trustworthiness of the training process may be performed, assuming that no indicator of untrustworthiness of the training process has been recorded (i.e. step 337 has not been performed).

Of course, process 315 may be terminated early, e.g. interrupted, in response to step 335 determining that the training process is untrustworthy.

In some further embodiments, the method 300 is configured to further comprise monitoring the frequency of the commitments by the external provider during the training process. In particular, step 331 may check that commitments of values of the first set of weights occur, on average, in accordance with the expected commitment frequency (e.g. based on the selection of the predetermined criteria for commitment).

Failure of the external provider to maintain the (average) expected commitment frequency may indicate that the neural network is not being trained appropriately (e.g. the neural network is not being fully trained, or only a subset of the neural network is being trained), and thus that the training of the neural network is untrustworthy.

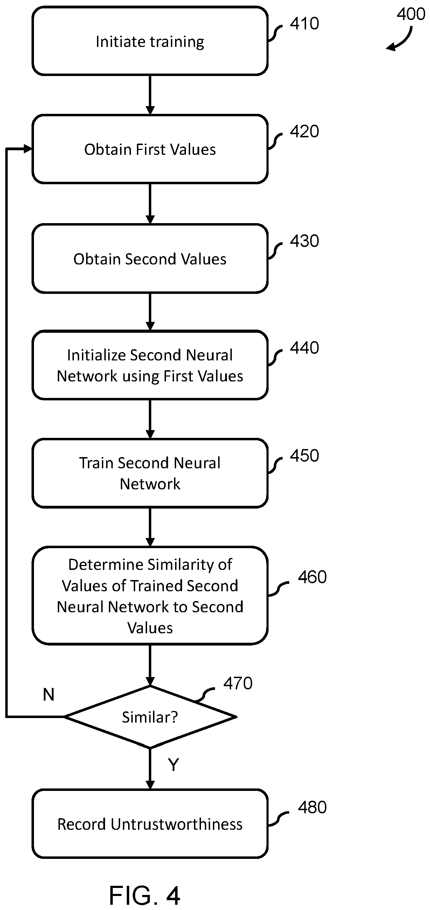

Figure 4 illustrates an alternative method 400 for determining a trustworthiness of the training of a neural network, according to another embodiment of the invention.

The method 400 may be performed in parallel to the method 300 described with reference to Figure 3.

The method 400 comprises a step 410 of instructing an external provider to train a neural network based on a ground truth dataset, the ground truth dataset providing sample input data entries and corresponding sample output data entries for the computational task desired by the electronic device;

The method 400 then performs step 420 of obtaining first values of all weights of the neural network. Thus, the "first set of weights", for this embodiment, comprises all weights of the neural network.

The method 400 then performs step 430 of obtaining second values of all weights of the neural network. The second values are values of all weights after one or more training epochs have been performed on the neural network since the weights of the neural network had the first values. The number of training epochs between the neural network having the first and second values may be known (or otherwise provided) to the monitoring device, and may be, for example, 1 or 5.

In some embodiments, where method 300 is performed alongside method 400, the first values of all weights may be values of all weights immediately before a "commitment epoch (of method 300), and the second values of all weights may be values of all weights immediately after the "commitment epoch".

The method 400 then performs a step 440 of initializing, at the monitoring device, a second neural network having weights of the first values.

The method 400 then moves to a step 450 of training the initialized second neural network, using the monitoring device. The same number of training epochs is performed in step 450 as was performed by the external provider between the weights of the neural network (of the external provider) having the first values and having the second values.

The method then determines, in a step 460, the similarity of the values of all weights of the trained second neural network to the second values of all weights of the neural network (of the external provider), obtained in step 430. This may be performed by calculating a distance or difference between values for all weights of the trained second neural network and the second values for all weights of the neural network (of the external provider).

In one example, a distance may be calculated by determining, for each weight of the trained second neural network, a (absolute) distance (or "individual distance") between the value of said weight and the corresponding second value for the corresponding weight of the neural network of the external provider, and combining (e.g. summing or averaging) the individual distances. This may be performed using an adapted version of equation (1).

The method then performs a determining step 470 of determining, based on the calculated similarity, whether the trained second neural network and the neural network having the second values are sufficiently similar. Step 470 may comprise, for example, determining whether the similarity breaches a predetermined threshold.

In response to determining that the trained second neural network and the neural network (of the external provider) having the second values are not sufficiently similar, the method may perform step 480 of recording an untrustworthiness of the (training of the) neural network (of the external provider).

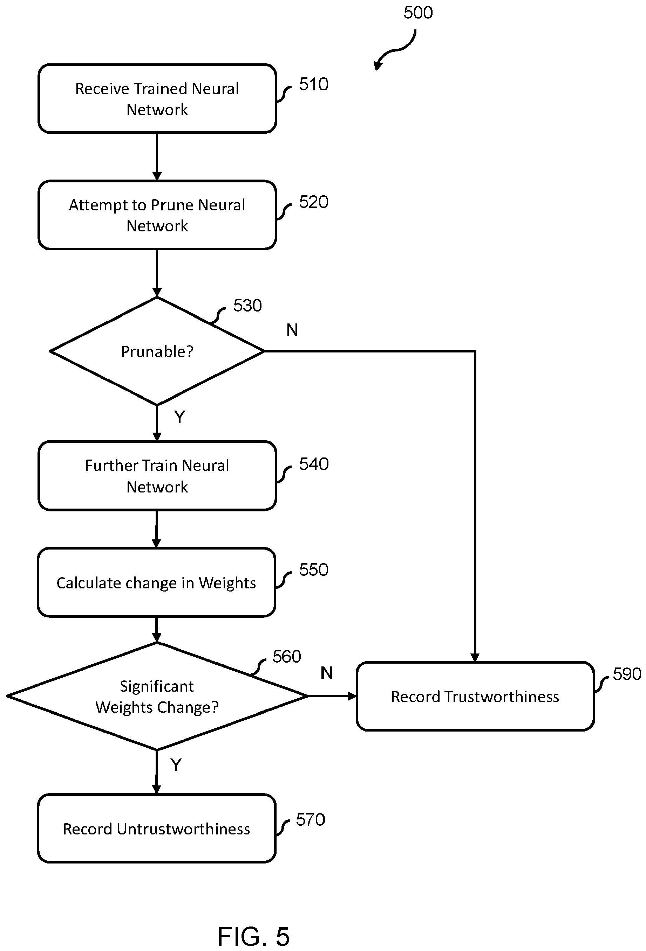

Figure 5 illustrates a method 500 for determining whether a trained neural network is trustworthy. Method 500 may be performed by a monitoring device configured to determine a trustworthiness of the trained neural network.

The method 500 of Figure 5 may be performed after the neural network has been trained, and determined to be trustworthy, e.g. by following the approach described with reference to Fig. 1, 3 and/or 4. This supplements the trustworthiness determination of this earlier described process, and increases a likelihood that a trustworthy neural network will be used.

Alternatively, this process may be a standalone process (e.g. performed without the need to perform the method described with reference to Figures 1, 3 and/or 4.

Generally, the method 500 is an embodiment of a process for determining a trustworthiness of a final trained neural network. The method 500 may comprise attempting to further train the final trained neural network, and, in response to values of a set of weights of the neural network changing significantly during training (e.g. by more than a predetermined amount), determining that the final trained neural network is untrustworthy.

Embodiments may also comprise attempting to prune the final trained neural network, with a failure to prune indicating that the final trained neural network is trustworthy.

The process 500 comprises a step 510 of obtaining a trained neural network. This step may be performed by the monitoring device obtaining the trained neural network from an external provider. In particular, if a structure of the neural network is already known to the monitoring device, step 510 may comprise obtaining values for all weights of the neural network.

The process 500 then moves to a step 520 of attempting to prune the neural network. It is then determined in step 530 whether or not the trained neural network is prunable (based on the outcome of step 520).

In response to the neural network not being prunable (i.e. it could not be pruned in step 520), the method performs a step 590 of recording a trustworthiness of the neural network.

In response to the neural network being prunable (i.e. it was successfully pruned in step 520), the method performs a step 540 of further training the (pruned) neural network, e.g. performing at least one further training epoch on the neural network.

Subsequently, a step 550 is performed of comparing the values of a set of weights of the further trained neural network to the values of the same set of weights of the originally obtained (in step 510) neural network. This process may comprise determining a distance or difference between each value of the set of weights of the further trained neural network and the corresponding value of the set of weights of the original neural network, and accumulating the determined distances. Thus, a total distance between the values of a set of weights of the further trained neural network and the originally obtained neural network may be obtained.

Subsequently, a step 560 is performed of determining whether there is a significant change in the value of the set of weights. This may be performed, for example, by determining whether the total distance breaches a predetermined threshold.

In response to step 560 determining that there is not a significant change in the value of the set of weights, step 590 of recording a trustworthiness of the neural network is performed. Otherwise, a step 570 of recording an untrustworthiness of the neural network is performed.

Steps 520 and 530 may be omitted, and the method 500 may simply attempt to perform the steps 540-590. Similarly, steps 540 - 560 could be omitted in some embodiments.

In summary, a monitoring device may obtain the final trained AI model and verify if it is/was correctly trained by re-training it and/or using pruning techniques. The monitoring device can perform the following actions for achieving such a decision.

If the obtained neural network cannot be pruned, then the external provider did not cheat during training. Otherwise, if the obtained neural network can be pruned, then the neural network is pruned and trained for an additional epoch.

If the values of the weights do not significantly change (e.g. using a distance measuring method), then it can be determined that the external provider did not cheat during the training process. If there is a significant change to the values of the weights, then it can be determined the external provider under-trained or falsely trained the neural network, so that the neural network is untrustworthy.

Method 500 recognizes that undertraining (e.g. performing too few training epochs) or appending dummy neurons to the neural network may result in a neural network that has not been optimized, but may still be capable of performing a desired task (albeit with a lower accuracy). The underlying concept of method 500 is to therefore check whether the trained model to be used by the external provider can be pruned and, if so, further trained. If the trained model can be both pruned and further trained, then this indicates that the trained model is untrustworthy.

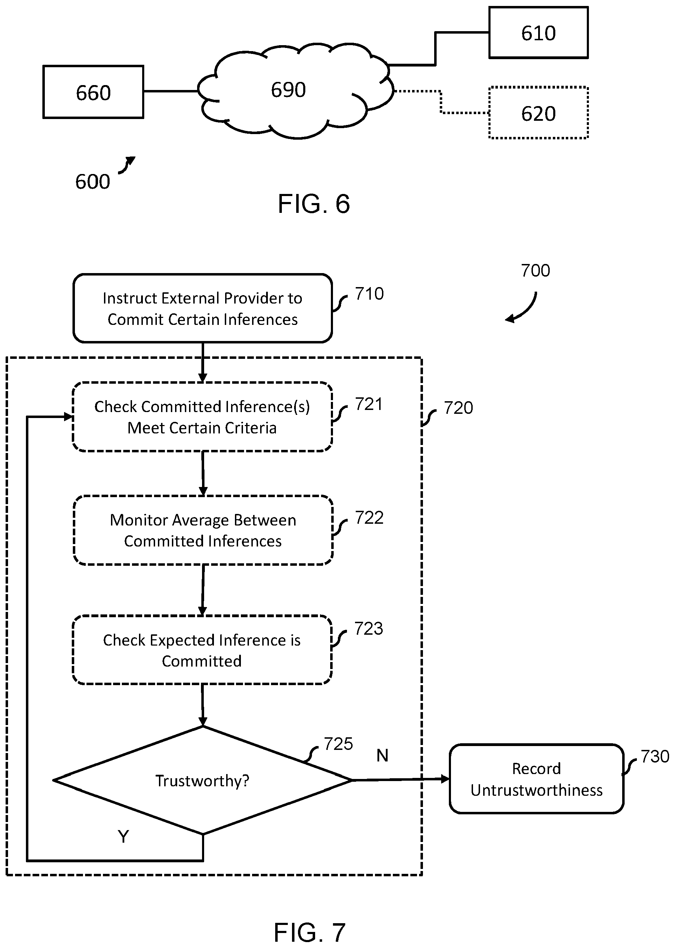

Figure 6 illustrates a system 600 in which embodiments of the method may take place.

The system 600 comprises an electronic device 610, 620 that wishes a certain computational task, which requires a neural network, to be performed. The electronic device 610, 620 outsources the training and use of the neural network to an external provider 660. The devices may communicate over a network 690, such as the internet.

In particular, the external provider has been instructed to train a neural network based on a ground truth dataset, the ground truth dataset providing sample input data entries and corresponding sample output data entries for the computational task desired by the electronic device.

The system 600 comprises a monitoring device 610 configured to determine a trustworthiness of the training of the neural network. The monitoring device 610 is, by itself, an embodiment of the invention.

The monitoring device 600 is configured to monitor values of a first set of one or more weights of the neural network during the training of the neural network performed by the external provider; and determine a trustworthiness of the training of the neural network based on the monitored values of the first set of one or more weights of the neural network.

The skilled person would be readily capable of adapting the monitoring device to perform any previously described method. In some examples, the monitoring device 610 comprises the electronic device that desires to perform the computational task. In other words, the monitoring device 610 and the electronic device may be one and the same. In other examples, the monitoring device 610 and the electronic device 620 are different devices.

Concepts of the invention may be applied to a fully trained neural network during an inference process performed by the external provider with the fully trained neural network.

Figure 7 is a flowchart illustrating a method 700 according to such a concept.

In particular, there is proposed a method 700 of determining a trustworthiness of the inference performed by an external provider configured to use a neural network to perform a computational task desired by an electronic device. The method 700 may be performed by a monitoring device, e.g. formed as an aspect of the electronic device itself.

The method comprises a step 710 of instructing the external provider to commit, e.g. communicate to a monitoring device or store for later communication to a monitoring device, information about an inference action in response to the information about the inference action meeting some second predetermined criteria.

The monitoring device may then process, in a process 720, the committed information about the inference action to determine a trustworthiness of the inference performed by the external provider. Process 720 may be performed throughout the inference process performed by the external provider (e.g. throughout a time during which the external provider performs an inference process for the electronic device).

The process 720 may comprise a step 721 of determining whether the committed information meets the second predetermined criteria. This effectively enables the monitoring device to check whether the correct neural network is being used for the inference action.

Preferably, the second predetermined criteria are selected so that the external provider commits information, on average, every Y many inference actions, where Y is a value between 4 and 64, e.g. between 4 and 32, e.g. between 8 and 32, e.g. 16.

The process 720 may further comprise a step 722 of monitoring the average number of inference actions between information being committed and, if this deviates from the selection of the second predetermined criteria, determine that the external provider is not consistently using the trained neural network, and that the inference performed by the external provider (and therefore the trained neural network) is therefore inaccurate or unreliable.

The (committed) information about an inference action may include, be a concatenation of or another combination of: input data, weights of the neural network, partially processed data (e.g. values at one or more nodes of the neural network during an inference action) and/or output data.

The second predetermined criteria may, for example, be a hashing-based (pseudo)random condition. In other words, the second predetermined criteria may be met when an output of a hash function that processes the information about the inference action meets some predetermined criteria, a predetermined value or a predetermined pattern.

A suitable hash function may process the information about the inference action and a cryptographic key to produce the output. In other words, the hash function may be a cryptographic hash function.

A suitable examples of cryptographic hash functions is the secure hash algorithm 2 (SHA), e.g. SHA256. However, other suitable cryptographic functions would be readily apparent to the skilled person, such as bcrypt, Whirlpool, SHA3, BLAKE2/BLAKE3 and so on, and may include any cryptographic hash function yet to be developed.

The second predetermined criteria may be met if an output of a hash function performed on the information about the inference action meets some predetermined criteria, e.g. if a predetermined number of most/least significant bits of the output are equal to a predetermined pattern (or one of a set of predetermined patterns).

For example, the predetermined number of most/least significant bits of the output may be the 4 least significant bits, and the predetermined pattern may be "0000". This results in the predetermined criteria being met, on average, every 16 inference actions. Other suitable numbers of most/least significant bits and patterns will be apparent to modify the average number of inference actions.

It is recognized that an external provider may still be able to cheat by running a cheaper model for part of the time, and have a rate of commitment slightly smaller than the desired frequency, but large enough to stay within acceptable error (e.g. 1 in 20 instead of a desired 1 in 16 inference actions).

To address such an attack, the monitoring device or method may be configured to perform (e.g. at the monitoring device) its own inference operations (e.g. based on input data to be inferred), using a copy of the neural network that the external provider is supposed to use. The monitoring device may perform this inference at a lower frequency than the external provider, to reduce computational power requirements.

The method may comprise determining, in a step 723, when a commit action by the external provider should have occurred, based on its own inference operation. In other words, the method 700 may comprise a step 723 of checking whether an expected inference has been correctly committed by the external device. The failure of the external provider to perform a commit action when it should have (based on the determination of the monitoring device) indicates that the external provider is not consistently or reliably using the desired neural network, so that the inference(s) performed by the neural network are not trustworthy.

Steps 721, 722, 723 provides example sub-steps for the process 720, and the skilled person would be capable of determining other steps for processing committed information (that meets second predetermined criteria) to determine a trustworthiness of the neural network used for the inference.

The information obtained in any of steps 721, 722 and 723 may be processed in a step 725 to determine whether or not the inference performed by the external provider is trustworthy (i.e. reliable). For example, a failure of the external device to meet an expected operation (e.g. failure for committed information to meet second predetermined criteria, failure for the average between committed inferences to meet an expected average or failure for an expected inference to be committed), within suitable error margins may indicate that the trained neural network is not trustworthy.

If step 725 determines that the inference is untrustworthy, this may be recorded in a step 730. Otherwise, the method may repeat process 720.

Embodiments of the invention generally relate to methods for determining a trustworthiness of a training of a neural network and/or of the trained neural network. Various steps could be taken in response to determining that a training of a neural network or the trained neural network is not trustworthy.

For example, the monitoring device may instruct the external provider to retrain the neural network, e.g. to force the external provider to correctly or appropriately train the neural network.

In another example, the monitoring device may instruct a different external provider to train a neural network using the ground truth dataset, and the electronic device may switch to using the different external provider to perform the computation task.

In yet another example, the monitoring device may simply flag that inferences performed by the external provider may not be accurate, and this information may be communicated to a user of the electronic device to allow them to make a decision on how to proceed (e.g. whether to switch external provider, proceed with the potentially less accurate neural network of the current external provider, instruct the external provider to retrain the neural network and so on).

Other steps that could be taken in response to determining that a training of the neural network or the trained neural network is untrustworthy would be apparent to the skilled person.

The skilled person would be readily capable of developing a processing system for carrying out any herein described method. Thus, each step of the flow chart may represent a different action performed by a processing system, and may be performed by a respective module of the processing system.

Embodiments may therefore make use of a processing system. The processing system can be implemented in numerous ways, with software and/or hardware, to perform the various functions required. A processor is one example of a processing system which employs one or more microprocessors that may be programmed using software (e.g., microcode) to perform the required functions. A processing system may however be implemented with or without employing a processor, and also may be implemented as a combination of dedicated hardware to perform some functions and a processor (e.g., one or more programmed microprocessors and associated circuitry) to perform other functions.

Examples of processing system components that may be employed in various embodiments of the present disclosure include, but are not limited to, conventional microprocessors, application specific integrated circuits (ASICs), and field-programmable gate arrays (FPGAs).

In various implementations, a processor or processing system may be associated with one or more storage media such as volatile and non-volatile computer memory such as RAM, PROM, EPROM, and EEPROM. The storage media may be encoded with one or more programs that, when executed on one or more processors and/or processing systems, perform the required functions. Various storage media may be fixed within a processor or processing system or may be transportable, such that the one or more programs stored thereon can be loaded into a processor or processing system.

It will be understood that disclosed methods are preferably computer-implemented methods. As such, there is also proposed the concept of computer program comprising code means for implementing any described method when said program is run on a processing system, such as a computer. Thus, different portions, lines or blocks of code of a computer program according to an embodiment may be executed by a processing system or computer to perform any herein described method. In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

In sum, an aspect of the present invention provides a mechanism for determining the trustworthiness of training a neural network, and thereby of the trained neural network. Values of a set of weights of the neural network are monitored during the training process. The monitored values are used to determine the trustworthiness of the training of the neural network.

**Claims**

1. A computer-implemented method (100, 300, 400) of determining a trustworthiness of a training, by an external provider (660), of a neural network (200), the computer-implemented method comprising:

   monitoring (120, 320, 420, 430) values of a first set of one or more weights of the neural network during the training of the neural network performed by the external provider; and
   determining (130, 335, 470) a trustworthiness of the training of the neural network based on the monitored values of the first set of one or more weights of the neural network.

**2.** The computer-implemented method of claim 1, wherein the first set of one or more weights of the neural network does not comprise all of the weights of the neural network.

**3.** The computer-implemented method of any of claims 1 or 2, wherein the step of monitoring a first set of one or more weights comprises instructing the external provider to, after each training epoch of the training of the neural network:

determine whether the output of a hash function, that processes at least the values of the first set of one or more weights, meets one or more predetermined criteria; and
in response to determining that the output of the hash function meets the predetermined criteria, transmit the values of the first set of one or more weights to a monitoring device implementing the method;

and wherein the step of determining a trustworthiness of the training of the neural network comprises determining, at the monitoring device, whether the output of the same hash function, that processes the transmitted values of the set or more weights and the cryptographic key, meets the predetermined criteria.

**4.** The computer-implemented method of claim 3, wherein the hash function and/or predetermined criteria are selected such that the average number of training epochs between each time the output of the hash function meets the predetermined criteria is between 8 and 32.

**5.** The computer-implemented method of any of claims 3 or 4, wherein the predetermined criteria comprise a predetermined number of least significant bits of the output of the hash function having a predetermined pattern.

**6.** The computer-implemented method of any of claims 3 to 5, wherein the hash function comprises processing the values of the first set of one or more weights and a cryptographic key to produce the output.

**7.** The computer-implemented method of any of claims 1 to 6, wherein the step of determining a trustworthiness of the training of the neural network comprises determining whether the values of the first set of one or more weights are converging over time.

**8.** The computer-implemented method of any of claims 1 to 7, wherein the first set of one or more weights comprises a first set of one or more weight traces of the neural network.

**9.** The computer-implemented method of any of claims 1 to 8, wherein the step of monitoring values of a first set of one or more weights comprises obtaining the values of the first set of one or more weights using a private information retrieval process.

**10.** The computer-implemented method (400) of any of claims 1 to 9, wherein the step of monitoring values of a first set of one or more weights comprises:

obtaining (420) first values of all weights of the neural network; and
obtaining (430) second values of all weights of the neural network, the second values being values of all weights after one or more training epochs have been performed on the neural network since the weights of the neural network had the first values;

and wherein the step of determining a trustworthiness of the training of the neural network comprises:

initializing (440) a second neural network having weights of the first values;
performing (450) a same number of one or more training epochs on the second neural network as the number of training epochs performed on the neural network between the weights of the neural network having the first values and the weights of the neural network having the second values, to produce a partially trained second neural network; and
comparing (460, 470) the values of all weights of the partially trained second neural network to the second values of all weights.

**11.** The computer-implemented method of any of claims 1 to 10, further comprising:

obtaining (510) the final trained neural network from the external provider;
performing (540) one or more further training epochs on the final trained neural network to generate a further trained neural network; and

comparing (550) the values of a second set of one or more weights of the further trained neural network to the values of the second set of one or more weights of the final trained neural network to determine a trustworthiness of the final trained neural network.

12. The computer-implemented method of claim 11, wherein the step (550) of comparing comprises determining that the final trained neural network is untrustworthy in response to the values of the second set of one or more weights of the further trained neural network differing by more than a predetermined amount to the values of the second set of one or more weights of the final trained neural network.

13. The computer-implemented method of any of claims 1 to 12, wherein the method is carried out by an electronic device that will use the neural network to perform a computational task.

14. A computer program product comprising computer program code means which, when executed on a computing device having a processing system, cause the processing system to perform all of the steps of the method according to any of claims 1 to 13.

15. A monitoring device (610) configured to determine a trustworthiness of the training, by an external provider (660), of a neural network (200), wherein the monitoring device is configured to perform all of the steps of the method according to any of claims 1 to 13.

FIG. 1

FIG. 2

FIG. 3

```
┌─────────────────────────┐
│     Initiate training   │ ⟋ 410          ⟋ 400
└─────────────────────────┘
            │
            ▼
┌─────────────────────────┐
│    Obtain First Values  │ ⟋ 420
└─────────────────────────┘
            │
            ▼
┌─────────────────────────┐
│   Obtain Second Values  │ ⟋ 430
└─────────────────────────┘
            │
            ▼
┌─────────────────────────┐
│   Initialize Second     │ ⟋ 440
│ Neural Network using     │
│      First Values        │
└─────────────────────────┘
            │
            ▼
┌─────────────────────────┐
│   Train Second Neural   │ ⟋ 450
│        Network          │
└─────────────────────────┘
            │
            ▼
┌─────────────────────────┐
│   Determine Similarity of│
│  Values of Trained Second│ ⟋ 460
│  Neural Network to Second│
│         Values          │
└─────────────────────────┘
            │
            ▼
      N    ◇ Similar? ◇ ⟋ 470
            │
            │ Y
            ▼
┌─────────────────────────┐
│  Record Untrustworthiness│ ⟋ 480
└─────────────────────────┘
```

FIG. 4

18

FIG. 5

610

660

690

620

600

## FIG. 6

700

Instruct External Provider to
Commit Certain Inferences — 710

Check Committed Inference(s)
Meet Certain Criteria — 721 — 720

Monitor Average Between
Committed Inferences — 722

Check Expected Inference is
Committed — 723

Trustworthy? — 725    N

Y

Record
Untrustworthiness — 730

## FIG. 7

| | Europäisches Patentamt European Patent Office Office européen des brevets | **EUROPEAN SEARCH REPORT** | Application Number EP 20 17 0152 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XINYU CHEN ET AL: "Tensorview : visualizing the training of convolutional neural network using paraview", PROCEEDINGS OF THE 1ST WORKSHOP ON DISTRIBUTED INFRASTRUCTURES FOR DEEP LEARNING , DIDL '17, 1 January 2017 (2017-01-01), pages 11-16, XP055735901, New York, New York, USA DOI: 10.1145/3154842.3154846 ISBN: 978-1-4503-5169-0 * page 11, right-hand column * * figures 1, 2 * * section 5, first paragraph * * section 5.2, first paragraph * | 1-15 | INV. G06N3/08 G06N3/04 G06N5/04 |
| X | DONGYU LIU ET AL: "DeepTracker", ACM TRANSACTIONS ON INTELLIGENT SYSTEMS AND TECHNOLOGY (TIST), ASSOCIATION FOR COMPUTING MACHINERY CORPORATION, 2 PENN PLAZA, SUITE 701 NEW YORK NY 10121-0701 USA, vol. 10, no. 1, 28 November 2018 (2018-11-28), pages 1-25, XP058421946, ISSN: 2157-6904, DOI: 10.1145/3200489 * abstract * * figures 2, 4 * ----- -/-- | 1,14,15 | TECHNICAL FIELDS SEARCHED (IPC) G06N |

The present search report has been drawn up for all claims

| Place of search | Date of completion of the search | Examiner |
|---|---|---|
| The Hague | 1 October 2020 | Theissing, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 20 17 0152

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Ben Hsu ET AL: "New Alpha Feature: Monitor Training Convergence", , 23 March 2019 (2019-03-23), pages 1-7, XP055735939, SigOpt Research & Company Blog Retrieved from the Internet: URL:https://sigopt.com/blog/new-feature-monitor-neural-network-training-sigopt/ [retrieved on 2020-10-01] * page 1 - page 4 * ----- | 1-15 | |

TECHNICAL FIELDS
SEARCHED      (IPC)

The present search report has been drawn up for all claims

| Place of search | Date of completion of the search | Examiner |
|---|---|---|
| The Hague | 1 October 2020 | Theissing, Simon |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

page 2 of 2